(19) Europäisches Patentamt
European Patent Office
Office européen des brevets

(11) EP 1 881 994 B1

(12) # EUROPÄISCHE PATENTSCHRIFT

(45) Veröffentlichungstag und Bekanntmachung des Hinweises auf die Patenterteilung:
**24.08.2016 Patentblatt 2016/34**

(21) Anmeldenummer: **06847012.9**

(22) Anmeldetag: **07.04.2006**

(51) Int Cl.:
***C08B 1/00*** *(2006.01)* ***C08L 1/02*** *(2006.01)*

(86) Internationale Anmeldenummer:
**PCT/EP2006/061422**

(87) Internationale Veröffentlichungsnummer:
**WO 2007/057235 (24.05.2007 Gazette 2007/21)**

(54) **LÖSUNGEN VON CELLULOSE IN IONISCHEN FLÜSSIGKEITEN**

CELLULOSE SOLUTIONS IN IONIC LIQUIDS

SOLUTIONS DE CELLULOSE DANS DES LIQUIDES IONIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.04.2005 DE 102005017715**

(43) Veröffentlichungstag der Anmeldung:
**30.01.2008 Patentblatt 2008/05**

(73) Patentinhaber: **BASF SE**
**67056 Ludwigshafen am Rhein (DE)**

(72) Erfinder:
- **MAASE, Matthias**
  **67346 Speyer (DE)**
- **STEGMANN, Veit**
  **68167 Mannheim (DE)**

(56) Entgegenhaltungen:
**EP-A1- 0 299 824** **WO-A-03/029329**
**WO-A-2006/108861** **DE-A1-102005 062 608**
**US-A- 4 367 191** **US-A- 4 750 939**

- **DATABASE CA CHEMICAL ABSTRACTS SERVICE, COLUMBUS, OHIO, US; XP002452139 gefunden im STN Database accession no. 142:338021 & DATABASE WPI Derwent Publications Ltd., London, GB; AN 2005-299127 & JP 2005 089689 A (FUJI PHOTO FILM CO LTD) 7. April 2005 (2005-04-07) & JP 2005 089689 A (FUJI PHOTO FILM CO LTD) 7. April 2005 (2005-04-07)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 881 994 B1

## Beschreibung

Die vorliegende Erfindung betrifft eine Lösung aus Cellulose und einer ionischen Flüssigkeit als Lösemittel, Verfahren zur deren Herstellung sowie deren Verwendung.

Cellulose ist ein sehr vielseitig verwendbarer Rohstoff. Für die Textilindustrie ist Cellulose beispielsweise der wichtigste Bestandteil der Faserrohstoffe, insbesondere der Baumwolle.

Cellulose kann unverändert oder nach physikalischer oder chemischer Behandlung eingesetzt werden. Für die beiden letzt genannten Fällen ist dabei von Vorteil, wenn Cellulose in einem Lösemittel in möglichst vollständig gelöster Form vorliegt. In den meisten Lösemitteln ist Cellulose jedoch unlöslich.

In manchen Kupferlösungen ist Cellulose als Kupfer-Chelat-Komplex löslich. Durch Ausfällen der Cellulose kann die so genannte regenerierte Cellulose erhalten werden. Solche Kupferlösungen sind jedoch wenig geeignet, um als Lösemittel für Cellulose bei deren physikalischer oder chemischer Behandlung zu dienen.

Daher wurde sehr früh schon als Lösemittel für Cellulose die in der Literatur unter anderem als ionische Flüssigkeiten bekannten Systeme vorgeschlagen.

So beschreibt US-A 1,943,176 die Auflösung von Cellulose in Benzylpyridiniumchlorid.

Bei Benzylpyridiniumchlorid als Beispiel einer ionischen Flüssigkeit handelt es sich um ein Salz, das schon bei vergleichsweise geringen Temperaturen in geschmolzener Form und somit als Flüssigkeit vorliegt.

Ionische Flüssigkeiten gewinnen als Lösungsmittel, z.B. bei Durchführung chemischer Reaktionen, zunehmend an Bedeutung. Peter Wasserscheidt, Angew. Chem. 2000, 112, 3926-3945 gibt beispielsweise einen Überblick über den Einsatz ionischer Flüssigkeiten bei der Übergangsmetallkatalyse.

Ionische Flüssigkeiten, die bereits bei Raumtemperatur in flüssigem Aggregatszustand vorliegen, werden beispielsweise von K.N. Marsh et al., Fluid Phase Equilibria 219 (2004), 93-98 und J.G. Huddleston et al., Green Chemistry 2001, 3, 156-164 beschrieben.

DE-A 102 02 838 beschreibt die Verwendung von ionischen Flüssigkeiten zur Abtrennung von Säuren aus chemischen Gemischen.

US-A-4 367 191 offenbart eine Lösung enthaltend Cellulose und eine ionische Flüssigkeit enthaltend Ammoniak ($NH_3$) und ein Salz (vorzugsweise $NH_4SCN$) als Lösemittel.

Aufgrund der guten Lösemitteleigenschaften ionischer Flüssigkeiten wird auch in der neueren internationalen Anmeldung WO-A 03/029329 deren Verwendung zum Auflösen von Cellulose vorgeschlagen. Es wird jedoch darin hervorgehoben, dass die ionischen Flüssigkeiten aus Kationen bestehen sollen, die ein quartäres Ammoniumion aufweisen, was durch Alkylgruppen, insbesondere Methyl, quarternisiert werden soll. Obwohl die in WO-A 03/029329 beschriebenen Charakteristika der Cellulose enthaltenen Lösung sowie deren Herstellung gute Ergebnisse aufweisen, besteht ein Bedarf verbesserte Lösungen bereitzustellen.

Eine Aufgabe der vorliegenden Erfindung liegt somit darin, eine Lösung aus aufgelöster Cellulose bereitzustellen, die verbesserte Eigenschaften zeigt.

Die Aufgabe wird gelöst durch eine Lösung enthaltend Cellulose und eine ionische Flüssigkeit enthaltend Anionen und Kationen als Lösemittel, wobei die Kationen mindestens ein Atom ausgewählt aus der Gruppe bestehend aus Stickstoff, Sauerstoff, Schwefel und Phosphor aufweisen, das in protonierter Form vorliegt, und wobei die ionische Flüssigkeit mindestens ein Kation enthält, das ausgewählt ist aus der Gruppe bestehend aus Kationen der Formeln (IVe) bis (IVt) gemäß anhängendem Anspruch 1.

Es wurde nämlich gefunden, dass durch die Herstellung von Kationen durch Wasserstoff (Protonierung), insbesondere durch die Quarternisierung des Stickstoffs, verbesserte Eigenschaften damit verbunden sein können. Insbesondere hat sich gezeigt, dass solche Lösungen, die ionische Flüssigkeiten enthalten, leichter aufarbeitbar sind. So können die ionischen Flüssigkeiten durch Zugabe einer Base in eine destillierbare Form überführt werden, was deren leichte Abtrennbarkeit bewirkt.

Die Protonierung kann an einem oder mehreren gleichen oder unterschiedlichen Heteroatomen (N, O, S, P) erfolgen. Neben der Erzeugung positiver Ladung durch Protonierung können auch weitere positive Ladungen in den Kationen beispielsweise durch Alkylierung eines Stickstoffs vorhanden sein.

Vorzugsweise weisen jedoch die Kationen mindestens ein Stickstoffatom auf, das in protonierter Form als Ammoniumkation vorliegt.

Die zu lösende Cellulose kann beispielsweise aus regenerierter Cellulose, faseriger Cellulose, Holzfasern, Linterstoff, Baumwolle oder Papier stammen.

Es ist bevorzugt, dass in der Lösung gemäß der vorliegenden Erfindung Cellulose mit mehr als 1 Gew.-% bezogen auf das Gesamtgewicht der Lösung vollständig gelöst werden. Mehr bevorzugt werden mehr als 3% Gew.-%, besonders bevorzugt mehr als 5 Gew.-% und insbesondere bevorzugt mindestens 7 Gew.-% bezogen auf das Gesamtgewicht der Lösung vollständig gelöst werden.

Geeigneterweise können bis zu 35 Gew.-% Cellulose bezogen auf das Gesamtgewicht der Lösung vollständig gelöst werden. Weiterhin können bis zu 25 Gew.-% Cellulose bezogen auf das Gesamtgewicht der Lösung vollständig

gelöst werden. Insbesondere geeignet für bestimmte Anwendungen sind Lösungen, bei denen Cellulose mit bis zu 15 Gew.-% vollständig gelöst sind.

Ionische Flüssigkeiten im Sinne der vorliegenden Erfindung sind vorzugsweise Salze der allgemeinen Formel

(A) Salze der allgemeinen Formel (I)

$[A]^+ [Y]^{n-}$ (I),

in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht;

(B) gemischte Salze der allgemeinen Formeln (II)

$[A^1]^+[A^2]^+ [Y]^{n-}$ (IIa),

wobei n = 2;

$[A^1]^+[A^2]^+[A^3]^+ [Y]^{n-}$ (IIb),

wobei n = 3; oder

$[A^1][A^2][A^3]^+[A^4]^+ [Y]^{n-}$ (IIc),

wobei n = 4 und wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die unter (A) genannte Bedeutung besitzt; oder

(C) gemischte Salze der allgemeinen Formeln (III)

$[A^1]^+[A^2]^+[A^3]^+[M^1]^+ [Y]^{n-}$ (IIIa),

wobei n = 4;

$[A^1]^+[A^2]^+[M^1]^+[M^2]^+ [Y]^{n}$- (IIIb),

wobei n = 4;

$[A^1]^+[M^1]^+[M^2]^+[M^3]^+ [Y]^{n-}$ (IIIc),

wobei n = 4;

$[A^1]^+[A^2]^+[M^1]^+ [Y]^{n-}$ (IIId),

wobei n = 3;

$[A^1]^+[M^1]^+[M^2]^+ [Y]^{n-}$ (IIIe),

wobei n = 3;

$[A^1][M^1]^+ [Y]^{n-}$ (IIIf),

wobei n = 2;

$[A^1]^+[A^2]^+[M^4]^{2+} [Y]^{n-}$ (IIIg),

wobei n = 4;

$[A^1]^+[M^1]^+[M^4]^{2+} [Y]^{n-}$ (IIIh),

wobei n = 4;

$[A^1]^+[M^5]^{3+} [Y]^{n-}$ (IIIi),

wobei n = 4; oder

$[A^1]^+[M^4]^{2+} [Y]^{n-}$ (IIIj),

wobei n = 3 und

wobei $[A^1]^+$, $[A^2]^+$ und $[A^3]^+$ unabhängig voneinander aus den für $[A]^+$ genannten Gruppen ausgewählt sind, $[Y]^{n-}$ die unter (A) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten.

Vorzugsweise besitzen die ionischen Flüssigkeiten einen Schmelzpunkt von weniger als 180°C. Weiterhin bevorzugt liegt der Schmelzpunkt in einem Bereich von -50°C bis 150°C, mehr bevorzugt im Bereich von -20°C bis 120°C und weiterhin mehr bevorzugt unter 100°C.

Verbindungen, die sich zur Bildung des Kations $[A]^+$ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder StickstoffHeterocyclus' ein Kation erzeugt werden. Die Quaternisierung kann durch Protonierung des Stickstoffatoms erfolgen. Je nach verwendetem Protonierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben. Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol und insbesondere unter 250 g/mol.

Die ionische Flüssigkeit enthält mindestens ein Kation, das ausgewählt ist aus der Gruppe bestehend aus Kationen der Formeln (IVe) bis (IVt):

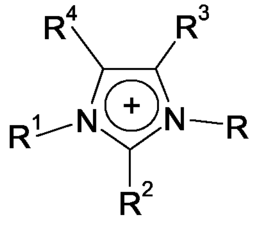

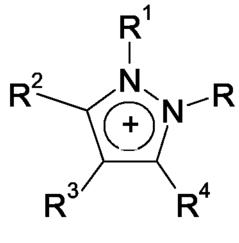

(IVe) (IVf)

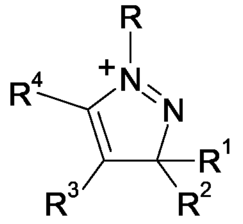

(IVg)

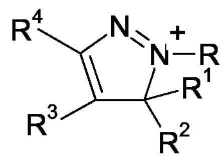

(IVg')

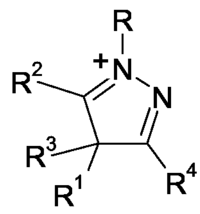

(IVh)

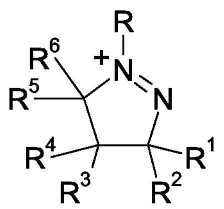

(IVi)

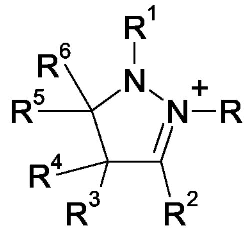

(IVj)

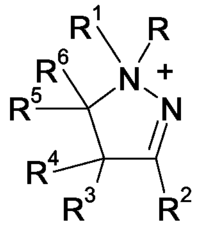

(IVj')

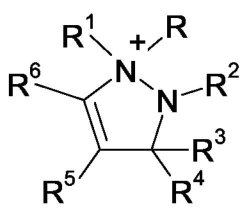

(IVk)

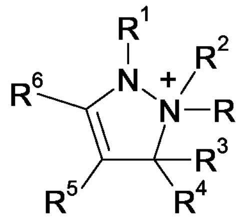

(IVk')

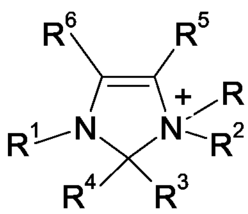

(IVl)

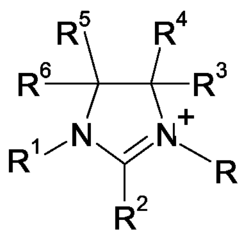

(IVm)

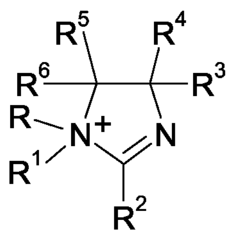

(IVm')

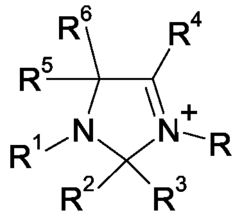

(IVn)

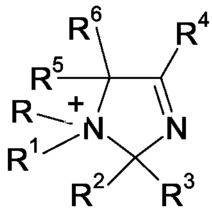

(IVn')

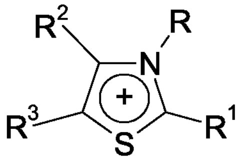

(IVo)

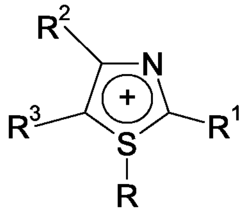

(IVo')

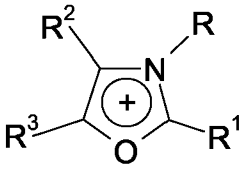

(IVp)

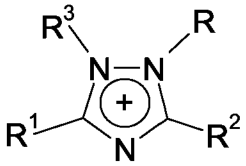

(IVq)

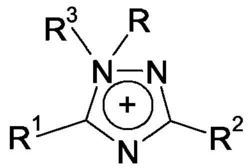

(IVq')

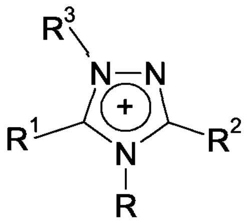

(IVq")

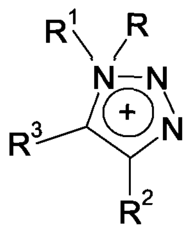

(IVr)

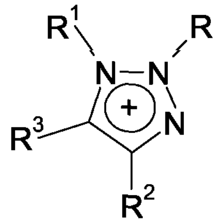

(IVr')

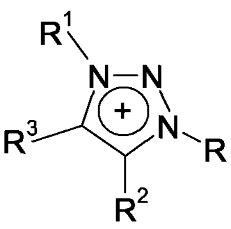

(IVr")

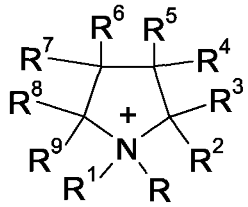

(IVs)

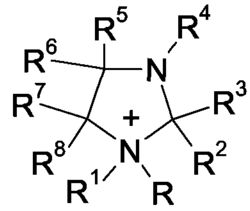

(IVt)

sowie Oligomere, die diese Strukturen enthalten.

In den oben genannten Formeln (IVe) bis (IVt) stehen der Rest R für Wasserstoff; und

die Reste $R^1$ bis $R^9$ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder

zwei benachbarte Reste aus der Reihe $R^1$ bis $R^9$ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste $R^1$ bis $R^9$ prinzipiell alle Heteroatome in Frage, welche in der Lage sind, formell eine $-CH_2-$, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte

Gruppen seien insbesondere -O-, -S-, -SO-, $-SO_2-$, -NR'-,-N=, -PR'-, $-PR'_2$ und $-SiR'_2-$ genannt, wobei es sich bei den Resten R' um den verbleibenden Teil des Kohlenstoff enthaltenden Rests handelt. Die Reste $R^1$ bis $R^9$ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe),$-NH_2$ (Amino), =NH (Imino), -COOH (Carboxy), $-CONH_2$ (Carboxamid), $-SO_3H$ (Sulfo) und -CN (Cyano) genannt. Funktionelle Gruppen und Heteroatome können auch direkt benachbart sein, so dass auch Kombinationen aus mehreren benachbarten Atomen, wie etwa -O- (Ether), -S- (Thioether), -COO- (Ester), -CONH- (sekundäres Amid) oder -CONR'- (tertiäres Amid) mit umfasst sind, beispielsweise Di-($C_1$-$C_4$-Alkyl)-amino, $C_1$-$C_4$-Alkyloxycarbonyl oder $C_1$-$C_4$-Alkyloxy.

Als Halogene seien Fluor, Chlor, Brom und Iod genannt.

Bevorzugt stehen die Reste $R^1$ bis $R^9$ unabhängig voneinander für

- Wasserstoff;
- Halogen;
- eine funktionelle Gruppe;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_1$-$C_{18}$-Alkyl-,
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl-,
- gegebenenfalls durch funktionelle Gruppen, Aryl, Alkyl, Aryloxy, Alkyloxy, Halogen, Heteroatome und/oder Heterocyclen substituiertes $C_6$-$C_{12}$-Aryl,
- gegebenenfalls durch funktionelle Gruppen, Aryl, Alkyl, Aryloxy, Alkyloxy, Halogen, Heteroatome und/oder Heterocyclen substituiertes $C_5$-$C_{12}$-Cycloalkyl;
- gegebenenfalls durch funktionelle Gruppen, Aryl, Alkyl, Aryloxy, Alkyloxy, Halogen, Heteroatome und/oder Heterocyclen substituiertes $C_5$-$C_{12}$-Cycloalkenyl; oder
- einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder

zwei benachbarte Reste zusammen für

- einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem $C_1$- bis $C_{18}$-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, $\alpha,\alpha$-Dimethylbenzyl,

p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, $C_nF_{2(n-a)+(1-b)}H_{2a+b}$ mit n gleich 1 bis 30, $0 \leq a \leq n$ und b = 0 oder 1 (beispielsweise $CF_3$, $C_2F_5$, $CH_2CH_2$-$C_{(n-2)}F_{2(n-2)+1}$, $C_6F_{13}$, $C_8F_{17}$, $C_{10}F_{21}$, $C_{12}F_{25}$), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxapentadecyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_2$- bis $C_{18}$-Alkenyl handelt es sich bevorzugt um Vinyl, 2-Propenyl, 3-Butenyl, cis-2-Butenyl, trans-2-Butenyl oder $C_nF_{2(n-a)-(1-b)}H_{2a-b}$ mit $n \leq 30$, $0 \leq a \leq n$ und b = 0 oder 1.

Bei gegebenenfalls durch funktionelle Guppen, Aryl, Alkyl, Aryloxy, Alkyloxy, Halogen, Heteroatome und/oder Heterocyclen substituiertes $C_6$-$C_{12}$-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitro-phenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder $C_6F_{(5-a)}H_a$ mit $0 \leq a \leq 5$.

Bei gegebenenfalls durch funktionelle Gruppen, Aryl, Alkyl, Aryloxy, Alkyloxy, Halogen, Heteroatome und/oder Heterocyclen substituiertes $C_5$- bis $C_{12}$-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, $C_nF_{2(n-a)-(1-b)}H_{2a-b}$ mit $n \leq 30$, $0 \leq a \leq n$ und b = 0 oder 1 sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes $C_5$- bis $C_{12}$-Cycloalkenyl handelt es sich bevorzugt um 3-Cyclopentenyl, 2-Cyclohexenyl, 3-Cyclohexenyl, 2,5-Cyclohexadienyl oder $C_nF_{2(n-a)-3(1-b)}H_{2a-3b}$ mit $n \leq 30$, $0 \leq a \leq n$ und b = 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste $R^1$ bis $R^9$ unabhängig voneinander für

- Wasserstoff;

- unverzweigtes oder verzweigtes, unsubstituiertes oder ein bis mehrfach mit Hydroxy, Halogen, Phenyl, Cyano, $C_1$- bis $C_6$-Alkoxycarbonyl und/oder Sulfonsäure substituiertes $C_1$- bis $C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;

- Glykole, Butylenglykole und deren Oligomere mit 1 bis 100 Einheiten und einem Wasserstoff oder einem $C_1$- bis $C_8$-Alkyl als Endgruppe, wie beispielsweise $R^AO-(CHR^B-CH_2-O)_n-CHR^B-CH_2-$ oder $R^AO-(CH_2CH_2CH_2CH_2O)_n-CH_2CH_2CH_2CH_2O-$ mit $R^A$ und $R^B$ bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;

- Vinyl; und

- N,N-Di-$C_1$- bis $C_6$-alkyl-amino, wie beispielsweise N,N-Dimethylamino und N,N-Diethylamino.

Ganz besonders bevorzugt stehen die Reste $R^1$ bis $R^9$ unabhängig voneinander für Wasserstoff oder $C_1$- bis $C_{18}$-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für $CH_3O-(CH_2CH_2O)_n-CH_2CH_2-$ und $CH_3CH_2O-(CH_2CH_2O)_n-CH_2CH_2-$ mit n gleich 0 bis 3.

Ganz besonders bevorzugt setzt man als Pyridiniumionen (IVa) solche ein, bei denen

- einer der Reste $R^1$ bis $R^5$ Methyl, Ethyl oder Chlor ist und die verbleibenden Reste $R^1$ bis $R^5$ Wasserstoff sind;
- $R^3$ Dimethylamino ist und die verbleibenden Reste $R^1$, $R^2$, $R^4$ und $R^5$ Wasserstoff sind;
- alle Reste $R^1$ bis $R^5$ Wasserstoff sind;
- $R^2$ Carboxy oder Carboxamid ist und die verbleibenden Reste $R^1$, $R^2$, $R^4$ und $R^5$ Wasserstoff sind; oder
- $R^1$ und $R^2$ oder $R^2$ und $R^3$ 1,4-Buta-1,3-dienylen ist und die verbleibenden Reste $R^1$, $R^2$, $R^4$ und $R^5$ Wasserstoff sind;

und insbesondere solche, bei denen

- $R^1$ bis $R^5$ Wasserstoff sind; oder
- einer der Reste $R^1$ bis $R^5$ Methyl oder Ethyl ist und die verbleibenden Reste $R^1$ bis $R^5$ Wasserstoff sind.

Als ganz besonders bevorzugte Pyridiniumionen (IVa) seine genannt Pyridinium, 2-Methylpyridinium, 2-Ethylpyridinium, 5-Etyl-2-methylpyridinium und 2-Methyl-3-ethylpyridinium.

Ganz besonders bevorzugt setzt man als Pyridaziniumionen (IVb) solche ein, bei denen

- $R^1$ bis $R^4$ Wasserstoff sind; oder
- einer der Reste $R^1$ bis $R^4$ Methyl oder Ethyl ist und die verbleibenden Reste $R^1$ bis $R^4$ Wasserstoff sind.

Ganz besonders bevorzugt setzt man als Pyrimidiniumionen (IVc) solche ein, bei denen

- $R^1$ Wasserstoff, Methyl oder Ethyl ist und $R^2$ bis $R^4$ unabhängig voneinander Wasserstoff oder Methyl sind; oder

- $R^1$ Wasserstoff, Methyl oder Ethyl ist, $R^2$ und $R^4$ Methyl sind und $R^3$ Wasserstoff ist.

Ganz besonders bevorzugt setzt man als Pyraziniumionen (IVd) solche ein, bei denen

- $R^1$ Wasserstoff, Methyl oder Ethyl ist und $R^2$ bis $R^4$ unabhängig voneinander Wasserstoff oder Methyl sind;
- $R^1$ Wasserstoff, Methyl oder Ethyl ist, $R^2$ und $R^4$ Methyl sind und $R^3$ Wasserstoff ist;
- $R^1$ bis $R^4$ Methyl sind; oder
- $R^1$ bis $R^4$ Methyl Wasserstoff sind.

Ganz besonders bevorzugt setzt man als Imidazoliumionen (IVe) solche ein, bei denen

- $R^1$ Wasserstoff, Methyl, Ethyl, 1-Propyl, 1-Butyl, 1-Pentyl, 1-Hexyl, 1-Octyl, 2-Hydroxyethyl oder 2-Cyanoethyl und $R^2$ bis $R^4$ unabhängig voneinander Wasserstoff, Methyl oder Ethyl sind.

Als ganz besonders geeignete Imidazolimionen (IVe) seien genannt 1-Methylimidazolium, 1-Ethylimidazolium, 1-n-Butylimidazolium, 1-n-Octylimidazolium, 1-n-Dodecylimidazolium, 1-n-Tetradecylimidazolium, 1-n-Hexadecylimidazolium, 1,2-Dimethylimidazolium, 1,4-Dimethylimidazolium, 2-Methylimidazolium, 3-Methylimidazolium, 3-Etylimidazolium, 3-n-butylimidazolium, 3-Octylimidazolium, 4-Methylimidazolium, 2-Ethylimidazolium, 1-Vinylimidazolium, 1-n-Octyl-4-methylimidazolium und 1,4,5-Trimethyl-imidazolium.

Ganz besonders bevorzugt setzt man als Pyrazoliumionen (IVf), (IVg) beziehungsweise (IVg') solche ein, bei denen

- $R^1$ Wasserstoff, Methyl oder Ethyl ist und $R^2$ bis $R^4$ unabhängig voneinander Wasserstoff oder Methyl sind.

Ganz besonders bevorzugt setzt man als Pyrazoliumionen (IVh) solche ein, bei denen

- $R^1$ bis $R^4$ unabhängig voneinander Wasserstoff oder Methyl sind.

Als ganz besonders bevorzugte Pyrazoliumionen seinen Pyrazolium und 1,4-Dimethylpyrazolium genannt.

Ganz besonders bevorzugt setzt man beim erfindungsgemäßen Verfahren als 1-Pyrazoliniumionen (IVi) solche ein, bei denen

- unabhängig voneinander $R^1$ bis $R^6$ Wasserstoff oder Methyl sind.

Ganz besonders bevorzugt setzt man als 2-Pyrazoliniumionen (IVj) beziehungsweise (IVj') solche ein, bei denen

- $R^1$ Wasserstoff, Methyl, Ethyl oder Phenyl ist und $R^2$ bis $R^6$ unabhängig voneinander Wasserstoff oder Methyl sind.

Ganz besonders bevorzugt setzt man als 3-Pyrazoliniumionen (IVk) beziehungsweise (IVk') solche ein, bei denen

- $R^1$ und $R^2$ unabhängig voneinander Wasserstoff, Methyl, Ethyl oder Phenyl sind und $R^3$ bis $R^6$ unabhängig voneinander Wasserstoff oder Methyl sind.

Ganz besonders bevorzugt setzt man als Imidazoliniumionen (IVl) solche ein, bei denen

- $R^1$ und $R^2$ unabhängig voneinander Wasserstoff, Methyl, Ethyl, 1-Butyl oder Phenyl sind, $R^3$ und $R^4$ unabhängig voneinander Wasserstoff, Methyl oder Ethyl sind und $R^5$ und $R^6$ unabhängig voneinander Wasserstoff oder Methyl sind.

Ganz besonders bevorzugt setzt man als Imidazoliniumionen (IVm) beziehungsweise (IVm') solche ein, bei denen

- $R^1$ und $R^2$ unabhängig voneinander Wasserstoff, Methyl oder Ethyl sind und $R^3$ bis $R^6$ unabhängig voneinander Wasserstoff oder Methyl sind.

Ganz besonders bevorzugt setzt man als Imidazoliniumionen (IVn) beziehungsweise (IVn') solche ein, bei denen

- $R^1$ bis $R^3$ unabhängig voneinander Wasserstoff, Methyl oder Ethyl sind und $R^4$ bis $R^6$ unabhängig voneinander Wasserstoff oder Methyl sind.

Ganz besonders bevorzugt setzt man als Thiazoliumionen (IVo) beziehungsweise (IVo') sowie als Oxazoliumionen (IVp) solche ein, bei denen

- $R^1$ Wasserstoff, Methyl, Ethyl oder Phenyl ist und $R^2$ und $R^3$ unabhängig voneinander Wasserstoff oder Methyl sind.

Ganz besonders bevorzugt setzt man beim als 1,2,4-Triazoliumionen (IVq), (IVq') beziehungsweise (IVq") solche ein, bei denen

- $R^1$ und $R^2$ unabhängig voneinander Wasserstoff, Methyl, Ethyl oder Phenyl sind und $R^3$ Wasserstoff, Methyl oder Phenyl ist.

Ganz besonders bevorzugt setzt man als 1,2,3-Triazoliumionen (IVr), (IVr') beziehungsweise (IVr") solche ein, bei denen

- $R^1$ Wasserstoff, Methyl oder Ethyl ist und $R^2$ und $R^3$ unabhängig voneinander Wasserstoff oder Methyl sind, oder $R^2$ und $R^3$ zusammen 1,4-Buta-1,3-dienylen ist.

Ganz besonders bevorzugt setzt man als Pyrrolidiniumionen (IVs) solche ein, bei denen

- $R^1$ Wasserstoff, Methyl, Ethyl oder Phenyl ist und $R^2$ bis $R^9$ unabhängig voneinander Wasserstoff oder Methyl sind.

Ganz besonders bevorzugt setzt man als Imidazolidiniumionen (IVt) solche ein, bei denen

- $R^1$ und $R^4$ unabhängig voneinander Wasserstoff, Methyl, Ethyl oder Phenyl sind und $R^2$ und $R^3$ sowie $R^5$ bis $R^8$ unabhängig voneinander Wasserstoff oder Methyl sind.

Ganz besonders bevorzugt setzt man als Ammoniumionen (IVu) solche ein, bei denen

- $R^1$ bis $R^3$ unabhängig voneinander $C_1$- bis $C_{18}$-Alkyl sind; oder
- $R^1$ und $R^2$ zusammen 1,5-Pentylen oder 3-Oxa-1,5-pentylen sind und $R^3$ $C_1$-$C_{18}$-Alkyl, 2-Hydroxyethyl oder 2-Cyanoethyl ist.

Beispiele für die tertiären Amine, von denen sich die quartären Ammoniumionen der allgemeinen Formel (IVu) durch Quaternisierung mit dem genannten Rest R ableiten, sind Diethyl-n-butylamin, Diethyl-tert-butylamin, Diethyl-n-pentylamin, Diethylhexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Di-isopropylpentylamin, Di-iso-propylhexylamin, Di-isopropyloctylamin, Di-isopropyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butylpyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Din-Butylphenylamin.

Bevorzugte tertiäre Amine (IVu) sind Di-iso-propylethylamin, Diethyl-tert-butylamin, Di-iso-propylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Ganz besonders bevorzugt setzt man als Guanidiniumionen (IVv) solche ein, bei denen

- $R^1$ bis $R^5$ Methyl sind.

Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Wasserstoff, Methyl, Ethyl, Acetyl, $-SO_2OH$ oder $-PO(OH)_2$ ist;

- $R^1$ Methyl, Ethyl, 1-Butyl oder 1-Octyl ist, $R^2$ eine $-CH_2-CH_2-OR^4$-Gruppe ist und $R^3$ und $R^4$ unabhängig voneinander Wasserstoff, Methyl, Ethyl, Acetyl, $-SO_2OH$ oder-$PO(OH)_2$ sind; oder

- $R^1$ eine $-CH_2-CH_2-OR^4$-Gruppe ist, $R^2$ eine $-CH_2-CH_2-OR^5$-Gruppe ist und $R^3$ bis $R^5$ unabhängig voneinander Wasserstoff, Methyl, Ethyl, Acetyl, $-SO_2OH$ oder $-PO(OH)_2$ sind.

Besonders bevorzugte Choliniumionen (IVw) sind solche, bei denen $R^3$ ausgewählt ist aus Wasserstoff, Methyl, Ethyl, Acetyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxaundecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Ganz besonders bevorzugt setzt man als Phosphoniumionen (IVx) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Unter den vorstehend genannten heterocyclischen Kationen sind die Pyridiniumionen, Pyrazolinium-, Pyrazoliumionen und die Imidazolinium- sowie die Imidazoliumionen bevorzugt. Ebenfalls bevorzugt sind Ammoniumionen.

Bei den in den Formeln (IIIa) bis (IIIj) genannten Metallkationen $[M^1]^+$, $[M^2]^+$, $[M^3]^+$, $[M^4]^{2+}$ und $[M^5]^{3+}$ handelt es sich im Allgemeinen um Metallkationen der 1., 2., 6., 7., 8., 9., 10., 11., 12. und 13. Gruppe des Periodensystems. Geeignete Metallkationen sind beispielsweise $Li^+$, $Na^+$, $K^+$, $Cs^+$, $Mg^{2+}$, $Ca^{2+}$, $Ba^{2+}$, $Cr^{3+}$, $Fe^{2+}$, $Fe^{3+}$, $Co^{2+}$, $Ni^{2+}$, $Cu^{2+}$, $Ag^+$, $Zn^{2+}$ und $Al^{3+}$.

Als Anionen sind prinzipiell alle Anionen einsetzbar.

Das Anion $[Y]^{n-}$ der ionischen Flüssigkeit ist beispielsweise ausgewählt aus

der Gruppe der Halogenide und halogenhaltigen Verbindungen der Formel:

$F^-$, $Cl^-$, $Br^-$, $I^-$, $BF4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6$,$^-ZnCl_3^-$, $SnCl_3^-$, $CuCl_2^-$, $CF_3SO_3^-$, $(CF_3SO_3)_2N^-$, $CF_3CO_2^-$, $CCl_3CO_2^-$, $CN^-$, $SCN^-$, $OCN^-$

der Gruppe der Sulfate, Sulfite und Sulfonate der allgemeinen Formel:

$SO_4^{2-}$, $HSO_4^-$, $SO_3^{2-}$, $HSO_3^-$, $R^aOSO_3^-$, $R^aSO_3^-$

der Gruppe der Phosphate der allgemeinen Formel

$PO_4^{3-}$, $HPO_4^{2-}$, $H_2PO_4^-$, $R^aPO_4^{2-}$, $HR^aPO_4^-$, $R^aR^bPO_4^-$

der Gruppe der Phosphonate und Phosphinate der allgemeinen Formel:

$R^aHPO_3^-$,$R^aR^bPO_2^-$, $R^aR^bPO_3^-$

der Gruppe der Phosphite der allgemeinen Formel:

$PO_3^{3-}$, $HPO_3^{2-}$, $H_2PO_3^-$, $R^aPO_3^{2-}$, $R^aHPO_3^-$, $R^aR^bPO_3^-$

der Gruppe der Phosphonite und Phosphinite der allgemeinen Formel:

$R^aR^bPO_2^-$, $R^aHPO_2^-$, $R^aR^bPO^-$, $R^aHPO^-$

der Gruppe der Carbonsäuren der allgemeinen Formel:

$R^aCOO^-$

der Gruppe der Borate der allgemeinen Formel:

$BO_3^{3-}$, $HBO_3^{2-}$, $H_2BO_3^-$, $R^aR^bBO_3^-$, $R^aHBO_3^-$, $R^aBO_3^{2-}$, $B(OR^a)(OR^b)(OR^c)(OR^d)$, $B(HSO_4)^-$, $B(R^aSO4)^-$

der Gruppe der Boronate der allgemeinen Formel:

$R^aBO_2^{2-}$, $R^aR^bBO^-$

der Gruppe der Carbonate und Kohlensäureester der allgemeinen Formel:

$HCO_3^-$, $CO_3^2$, $R^aCO_3^-$

der Gruppe der Silikate und Kieselsäuresäureester der allgemeinen Formel:

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$

der Gruppe der Alkyl- bzw. Arylsilan-Salze der allgemeinen Formel:

$R^aSiO_3^{3-}$, $R^aR^bSiO_2^{2-}$, $R^aR^bR^cSiO^-$, $R^aR^bR^cSiO_3$, $R^aR^bR^cSiO_2^-$, $R^aR^bSiO_3^{2-}$

der Gruppe der Carbonsäureimide, Bis(sulfonyl)imide und Sulfonylimide der allgemeinen Formel:

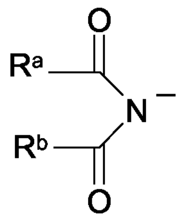
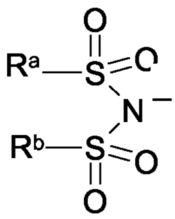
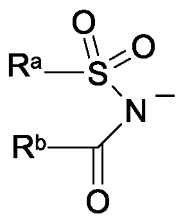

der Gruppe der Methide der allgemeinen Formel:

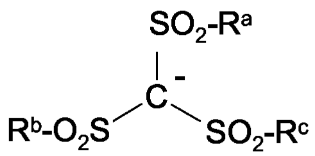

;

der Gruppe der Alkoxide und Aryloxide der allgemeinen Formel $R^aO^-$;

der Gruppe der Halometallate der allgemeinen Formel$[M_qHal_r]^{s-}$,
wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt;

der Gruppe der Sulfide, Hydrogensulfide, Polysulfide, Hydrogenpolysulfide und Thiolate der allgemeinen Formeln:

$S^{2-}$, $HS^-$, $[S_v]^{2-}$, $[HS_v]^-$, $[R^aS]^-$,

wobei v eine ganze positive Zahl von 2 bis 10 ist;

der Gruppe der komplexen Metallionen wie $Fe(CN)_6^{3-}$, $Fe(CN)_6^{4-}$, $MnO_4^-$, $Fe(CO)_4^-$.

Darin bedeuten $R^a$, $R^b$, $R^c$ und $R^d$ unabhängig voneinander jeweils Wasserstoff, $C_1$-$C_{30}$-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen

Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes $C_1$-$C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Headecyl, Octadecyl, 1,1-Dimethylpropyl, 1,1-Dimethylbutyl, 1,1,3,3-Tetramethylbutyl, Benzyl, 1-Phenylethyl, $\alpha,\alpha$-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxanonyl, 14-Hydroxy-5,10-oxatetradecyl, 5-Methoxy-3-oxapentyl, 8-Methoxy-3,6-dioxaoctyl, 11-Methoxy-3,6,9-trioxaundecyl, 7-Methoxy-4-oxaheptyl, 11-Methoxy-4,8-dioxaundecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes $C_6$-$C_{14}$-Aryl sind beispielsweise Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes $C_5$-$C_{12}$-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger, Sauerstoff-, Stickstoff- und/oder Schwefelatome aufweisender Heterocyclus ist beispielsweise Furyl , Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.

Bevorzugte Anionen sind ausgewählt aus der Gruppe der Halogenide und halogenhaltigen Verbindungen, der Gruppe der Carbonsäuren, der Gruppe der Sulfate, Sulfite und Sulfonate sowie der Gruppe der Phosphate.

Bevorzugte Anionen sind Chlorid, Bromid, Iodid, $SCN^-$, $OCN^-$, $CN^-$, Acetat, $C_1$-$C_4$ Alkylsulfate, $R^a$-$COO^-$, $R^aSO_3^-$, $R^aR^bPO_4^-$, Methansulfonate, Tosylat, $C_1$-$C_4$ Dialkylphosphate, Hydrogensulfat oder Tetrachloroaluminat.

Besonders bevorzugte Anionen sind Cl-, $CH_3COO$ oder $CH_3SO_3^-$.

In der ionischen Flüssigkeit liegen Kationen sowie Anionen vor. Innerhalb der ionischen Flüssigkeit wird vom Kation ein Proton oder ein Alkylrest an das Anion übertragen. Hierdurch entstehen zwei neutrale Moleküle. Es liegt also ein Gleichgewicht vor, in welchem Anionen, Kationen und die zwei daraus gebildeten neutralen Moleküle vorliegen.

Vorzugsweise weist die Lösung eine Temperatur von höchstens 180°C auf. Mehr bevorzugt weist die Lösung der vorliegenden Erfindung eine Temperatur von höchstens 160°C, weiterhin mehr bevorzugt von höchstens 120°C und besonders bevorzugt von höchstens 100°C auf.

Ein weiterer Gegenstand der vorliegenden Erfindung ist ein Verfahren zur Herstellung einer erfindungsgemäßen Lösung die Schritte enthaltend

a) Zugeben von Cellulose zu einer Lösung enthaltend eine ionische Flüssigkeit enthaltend Anionen und Kationen als Lösemittel, wobei die Kationen mindestens ein Stickstoffatom aufweisen, das in protonierter Form als Ammoniumkation vorliegt und

b) Vermischen der Lösung, bis die Cellulose vollständig aufgelöst ist.

Das Vermischen erfolgt vorzugsweise durch Rühren, Schütteln und/oder mit Hilfe von Mikrowellen.

Vorzugsweise erfolgt das Auflösen innerhalb von 3 Tagen, mehr bevorzugt innerhalb eines Tages und besonders bevorzugt innerhalb von 12 Stunden.

Ein weiterer Gegenstand der vorliegenden Erfindung ist die Verwendung einer Lösung gemäß der vorliegenden Erfindung zur physikalischen oder chemischen Behandlung von Cellulose.

Die chemische Behandlung kann die Oxidation, Reduktion, Pyrolyse, Hydrolyse, Isomerisierung, Versterung, Alkoxylierung oder Copolymerisation umfassen.

Die vorliegende Erfindung wird anhand der nachfolgenden Beispiele näher erläutert.

Beispiele

Beispiel 1

0,78 g Zeitungspapier werden in Stücke von ca. 1$cm^2$ geschnitten, mit 10,0 g 1-Methylimidazol Hydrochlorid (1-Methylimidazoliumchlorid) versetzt und bei 120°C gerührt. Nach 23 h hat sich das Papier vollständig aufgelöst.

Beispiel 2

7,8 g Filterpapier (Blaubandfilter) werden in Stücke von ca. 1 $cm^2$ geschnitten, mit 100 g 1-Methylimidazol Hydrochlorid versetzt und bei 95°C gerührt. Nach 72 h hat sich das Papier vollständig aufgelöst.

**Patentansprüche**

1. Eine Lösung enthaltend Cellulose und eine ionische Flüssigkeit enthaltend Anionen und Kationen als Lösemittel, wobei die Kationen mindestens ein Atom ausgewählt aus der Gruppe bestehend aus Stickstoff, Sauerstoff, Schwefel und Phosphor aufweisen, das in protonierter Form vorliegt und wobei die ionische Flüssigkeit mindestens ein Kation enthält, das ausgewählt ist aus der Gruppe bestehend aus Kationen der Formeln (IVe) bis (IVt):

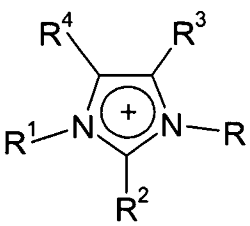
(IVe)

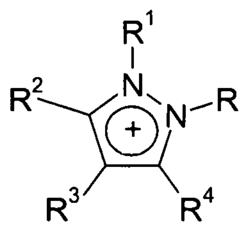
(IVf)

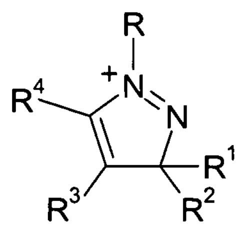
(IVg)

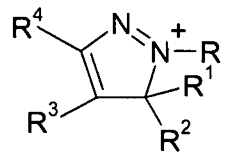
(IVg')

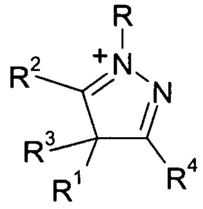
(IVh)

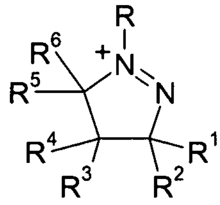
(IVi)

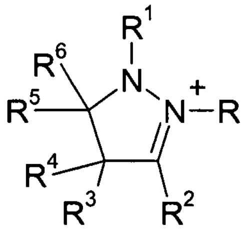
(IVj)

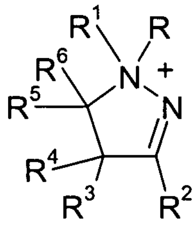
(IVj')

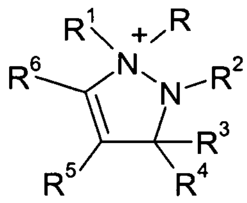
(IVk)

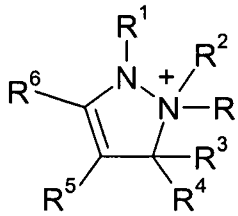
(IVk')

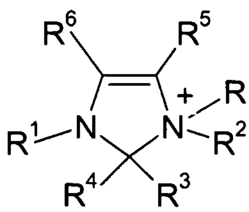
(IVl)

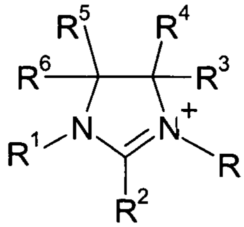
(IVm)

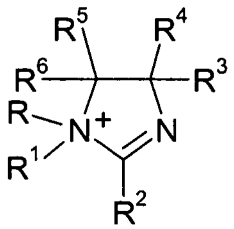
(IVm')

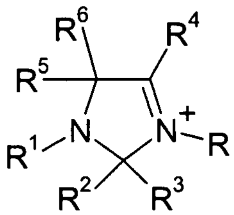
(IVn)

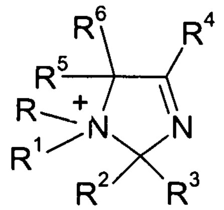
(IVn')

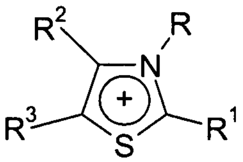
(IVo)

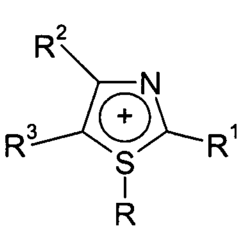
(IVo')

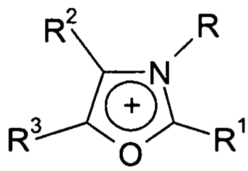
(IVp)

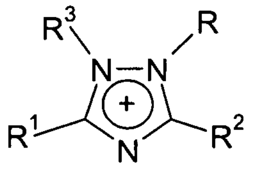

(IVq)

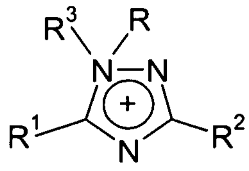

(IVq')

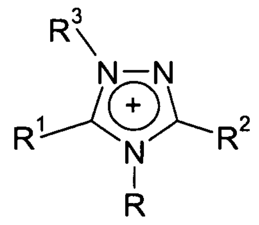

(IVq")

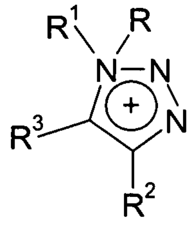

(IVr)

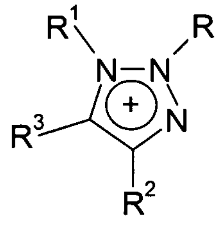

(IVr')

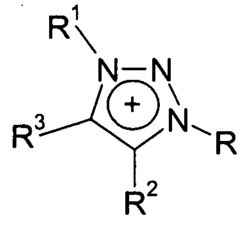

(IVr")

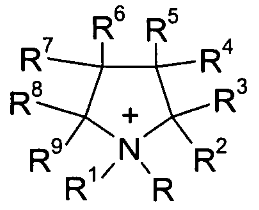

(IVs)

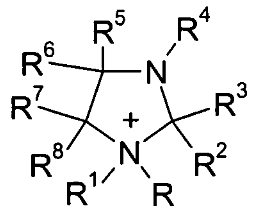

(IVt)

sowie Oligomere, die diese Struktur enthalten, wobei
der Rest R für Wasserstoff, und
die Reste $R^1$ bis $R^9$ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder
zwei benachbarte Reste aus der Reihe $R^1$ bis $R^9$ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen können.

2. Lösung nach Anspruch 1, **dadurch gekennzeichnet, dass** die Kationen mindestens ein Stickstoffatom aufweisen, das in protonierter Form als Ammoniumkation vorliegt.

3. Lösung nach Anspruch 1 oder 2, **dadurch gekennzeichnet, dass** Cellulose mit mehr als 1 Gew.-% bezogen auf das Gesamtgewicht der Lösung in der Lösung enthalten ist.

4. Lösung nach einem der Ansprüche 1 bis 3, **dadurch gekennzeichnet, dass** Anionen und Kationen ein Salz der allgemeinen Formel (I)

$$[A]_n^+ \ [Y]^{n-} \qquad (I),$$

in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht;

gemischte Salze der allgemeinen Formeln (II)

$[A^1][A^2]\ [Y]^{n-}$ (IIa),

wobei n = 2;

$[A^1]^+[A^2]^+[A^3]^+\ [Y]^{n-}$ (IIb),

wobei n = 3; oder

$[A^1]^+[A^2]^+[A^3]^+[A^4]^+\ [Y]^{n-}$ (IIc),

wobei n = 4 und wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die zu Formel (I) genannte Bedeutung besitzt; oder
gemischte Salze der allgemeinen Formeln (III)

$[A^1]^+[A^2]^+[A^3]^+[M^1]^+\ [Y]^{n-}$ (IIIa),

wobei n = 4;

$[A^1]^+[A^2]^+[M^1]^+[M^2]^+\ [Y]^{n-}$ (IIIb),

wobei n = 4;

$[A^1]^+[M^1]^+[M^2]^+[M^3]^+\ [Y]^{n-}$ (IIIc),

wobei n = 4;

$[A^1]^+[A^2]^+[M^1]^+\ [Y]^{n-}$ (IIId),

wobei n = 3;

$[A^1]^+[M^1]^+[M^2]^+\ [Y]^{n-}$ (IIIe),

wobei n = 3;

$[A^1]^+[M^1]^+\ [Y]^{n-}$ (IIIf),

wobei n = 2;

$[A^1]^+[A^2]^+[M^4]^{2+}\ [Y]^{n-}$ (IIIg),

wobei n = 4;

$[A^1]^+[M^1]^+[M^4]^{2+}\ [Y]^{n-}$ (IIIh),

wobei n = 4;

$[A^1]^+[M^5]^{3+}\ [Y]^{n-}$ (IIIi),

wobei n = 4; oder

$[A^1]^+[M^4]^{2+}\ [Y]^{n-}$ (IIIj),

wobei n = 3 und wobei $[A^1]$, $[A^2]^+$ und $[A^3]^+$ unabhängig voneinander aus den für $[A]^+$ genannten Gruppen ausgewählt sind, $[Y]^{n-}$ die zu Formel (I) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten, bilden.

**5.** Lösung nach einem der Ansprüche 1 bis 4, **dadurch gekennzeichnet, dass** die ionische Flüssigkeit mindestens ein Anion enthält, das ausgewählt ist aus der Gruppe bestehend aus

der Gruppe der Halogenide und halogenhaltigen Verbindungen der Formel:

$F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, SbF6$^-$, $AsF_6$,$^-$$ZnCl_3^-$, $SnCl_3^-$, $CuCl_2^-$, $CF_3SO_3^-$, $(CF_3SO_3)_2N^-$, $CF_3CO_2^-$, $CCl_3CO_2^-$, $CN^-$, $SCN^-$, $OCN^-$,

der Gruppe der Sulfate, Sulfite und Sulfonate der allgemeinen Formel:

$SO_4^{2-}$, $HSO_4^-$, $SO_3^{2-}$, $HSO_3^-$, $R^aOSO_3^-$, $R^aSO_3^-$,

der Gruppe der Phosphate der allgemeinen Formel

$PO_4^{3-}$, $HPO_4^{2-}$, $H_2PO_4^-$, $R^aPO_4^{2-}$, $HR^aPO_4^-$, $R^aR^bPO_4^-$,

der Gruppe der Phosphonate und Phosphinate der allgemeinen Formel:

$R^aHPO_3^-$,$R^aR^bPO_2^-$, $R^aR^bPO_3^-$,

der Gruppe der Phosphite der allgemeinen Formel:

$PO_3^{3-}$, $HPO_3^{2-}$, $H_2PO_3^-$, $R^aPO_3^{2-}$, $R^aHPO_3^-$, $R^aR^bPO_3^-$,

der Gruppe der Phosphonite und Phosphinite der allgemeinen Formel:

$R^aR^bPO_2^-$, $R^aHPO_2^-$, $R^aR^bPO^-$, $R^aHPO^-$,

der Gruppe der Carbonsäuren der allgemeinen Formel: $R^aCOO^-$,
der Gruppe der Borate der allgemeinen Formel:

$BO_3^{3-}$, $HBO_3^{2-}$, $H_2BO_3^-$, $R^aR^bBO_3^-$, $R^aHBO_3^-$, $R^aBO_3^{2-}$, $B(OR^a)(OR^b)(OR^c)(OR^d)^-$, $B(HSO_4)^-$, $B(R^aSO_4)^-$,

der Gruppe der Boronate der allgemeinen Formel $R^aBO_2^{2-}$, $R^aR^bBO^-$,
der Gruppe der Carbonate und Kohlensäureester der allgemeinen Formel:

$HCO_3^-$, $CO_3^{2-}$, $R^aCO_3^-$,

der Gruppe der Silikate und Kieselsäuresäureester der allgemeinen Formel:

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$,

der Gruppe der Alkyl- bzw. Arylsilan-Salze der allgemeinen Formel:

$R^aSiO_3^{3-}$, $R^aR^bSiO_2^{2-}$, $R^aR^bR^cSiO^-$, $R^aR^bR^cSiO_3^-$, $R^aR^bR^cSiO_2^-$, $R^aR^bSiO_3^{2-}$,

der Gruppe der Carbonsäureimide, Bis(sulfonyl)imide und Sulfonylimide der allgemeinen Formel:

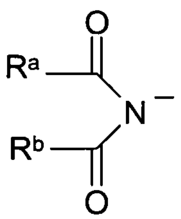
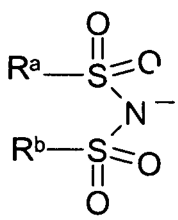
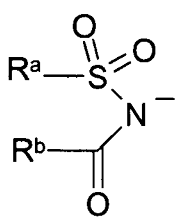
,

der Gruppe der Methide der allgemeinen Formel:

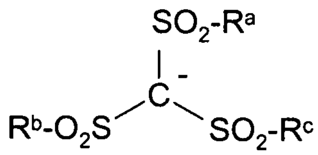

;

der Gruppe der Alkoxide und Aryloxide der allgemeinen Formel $R^aO$-,
der Gruppe der Halometallate der allgemeinen Formel $[M_qHal_r]^{s-}$,
wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt,
der Gruppe der Sulfide, Hydrogensulfide, Polysulfide, Hydrogenpolysulfide und Thiolate der allgemeinen Formeln:

$S^{2-}$, $HS^-$, $[S_v]^{2-}$, $[HS_v]^-$, $[R^aS]^-$, wobei v eine ganze positive Zahl von 2 bis 10 ist, und

der Gruppe der komplexen Metallionen wie $Fe(CN)_6^{3-}$, $Fe(CN)_6^{4-}$, $MnO_4^-$, $Fe(CO)_4^-$, wobei

$R^a$, $R^b$, $R^c$ und $R^d$ unabhängig voneinander jeweils Wasserstoff, $C_1$-$C_{18}$-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-C,$_8$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus sind, und wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

**6.** Lösung nach einem der Ansprüche 1 bis 5, **dadurch gekennzeichnet, dass** die Lösung eine Temperatur von höchstens 180°C aufweist.

**7.** Verfahren zur Herstellung einer Lösung nach einem der Ansprüche 1 bis 6 die Schritte enthaltend

a) Zugeben von Cellulose zu einer Lösung enthaltend eine ionische Flüssigkeit, wie in einem der Ansprüche 1 bis 6 angegeben und
b) Vermischen der Lösung, bis die Cellulose vollständig aufgelöst ist.

**8.** Verwendung einer Lösung nach einem der Ansprüche 1 bits 6 zur physikalischen oder chemischen Behandlung von Cellulose.

## Claims

**1.** A solution comprising cellulose and an ionic liquid comprising anions and cations as solvent, wherein the cations comprise at least one atom selected from the group consisting of nitrogen, oxygen, sulfur and phosphorus which is present in protonated form and wherein the ionic liquid comprises at least one cation selected from the group consisting of cations of the formulae (IVe) to (IVt):

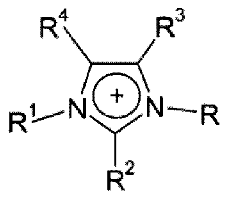

(IVe)

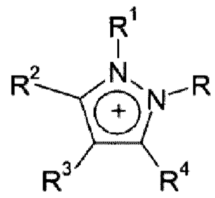

(IVf)

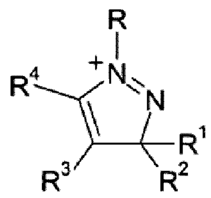

(IVg)

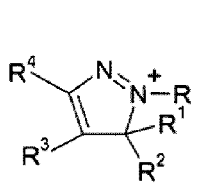

(IVg')

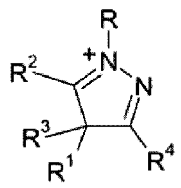

(IVh)

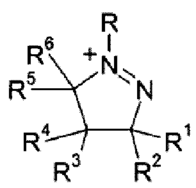

(IVi)

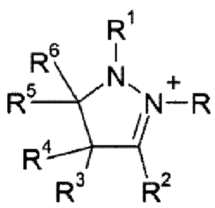

(IVj)

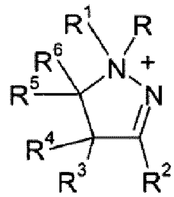

(IVj')

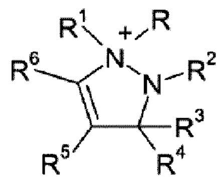

(IVk)

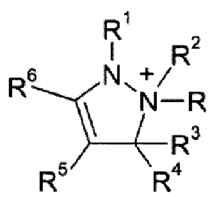

(IVk')

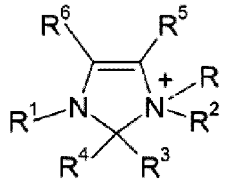

(IVl)

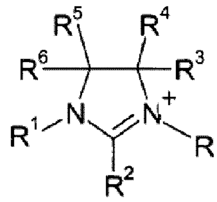

(IVm)

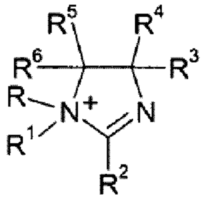

(IVm')

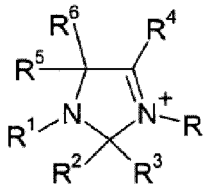

(IVn)

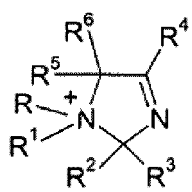

(IVn')

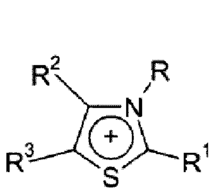

(IVo)

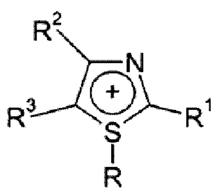

(IVo')

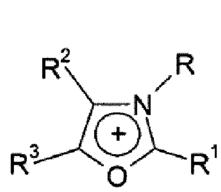

(IVp)

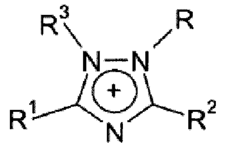

(IVq)

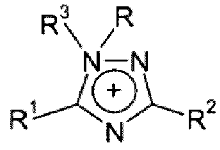

(IVq')

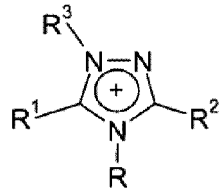

(IVq")

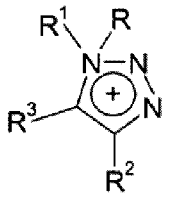

(IVr)

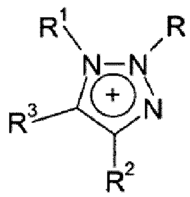

(IVr')

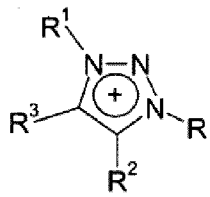

(IVr")

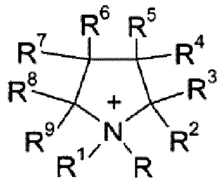

(IVs)

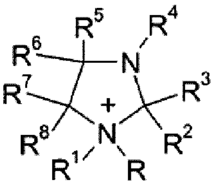

(IVt)

and oligomers comprising these structures, where
the radical R is hydrogen; and
the radicals $R^1$ to $R^9$ are each, independently of one another, hydrogen, a sulfo group or a carbon-comprising organic, saturated or unsaturated, acyclic or cyclic, aliphatic, aromatic or araliphatic radical which has from 1 to 20 carbon atoms and is unsubstituted or interrupted by from 1 to 5 heteroatoms or functional groups or substituted, with the radicals $R^1$ to $R^9$ which are bound to a carbon atom (and not to a heteroatom) in the abovementioned formulae (IV) also being able to be halogen or a functional group; or two adjacent radicals from the group consisting of $R^1$ to $R^9$ can together also be a divalent, carbon-comprising organic, saturated or unsaturated, acyclic or cyclic, aliphatic, aromatic or araliphatic radical which has from 1 to 30 carbon atoms and is unsubstituted or interrupted by from 1 to 5 heteroatoms or functional groups or substituted.

2. The solution according to claim 1, wherein the cations comprise at least one nitrogen atom which is present in protonated form as ammonium cation.

3. The solution according to claim 1 or 2, wherein more than 1% by weight of cellulose, based on the total weight of the solution, is comprised in the solution.

4. The solution according to any of claims 1 to 3, wherein anions and cations form a salt of the general formula (I)

$$[A]_n^+ \quad [Y]^{n-} \qquad (I),$$

where n is 1, 2, 3 or 4, $[A]^+$ is a quaternary ammonium cation, an oxonium cation, a sulfonium cation or a phosphonium cation and $[Y]^{n-}$ is a monovalent, divalent, trivalent or tetravalent anion;
mixed salts of the general formulae (II)

$$[A^1]^+[A^2]^+ [Y]^{n-} \qquad (IIa),$$

where n = 2;

$[A^1]^+[A^2]^+[A^3]^+ [Y]^{n-}$ (IIb),

where n = 3; or

$[A^1]+[A^2]+[A^3]+[A^4]^+ [Y]^{n-}$ (IIc),

where n = 4, and where $[A^1]^+$, $[A^2]^+$, $[A^3]^+$ and $[A^4]^+$ are selected independently from among the groups mentioned for $[A]^+$, and $[Y]^{n-}$ is as defined for formula (I); or
mixed salts of the general formulae (III)

$[A^1]^+[A^2]^+[A^3]^+[M^1]^+ [Y]^{n-}$ (IIIa),

where n = 4;

$[A^1]^+[A^2]^+[M^1]^+[M^2]^+ [Y]^{n-}$ (IIIb),

where n = 4;

$[A^1]^+[M^1]+[M^2]+[M^3]^+ [Y]^n-$ (IIIc),

where n = 4;

$[A^1]+[A^2]^+[M^1]^+ [Y]^{n-}$ (IIId),

where n = 3;

$[A^1]^+[M^1]^+[M^2]^+ [Y]^n$ (IIIe),

where n = 3;

$[A^1]+[M^1] + [Y]^{n-}$ (IIIf),

where n = 2;

$[A^1]+[A^2]+[M^4]^{2+} [Y]^{n-}$ (IIIg),

where n = 4;

$[A^1]+[M^1]+[M^4]^{2+} [Y]^n-$ (IIIh),

where n = 4;

$[A^1]+[M^2]^{3+} [Y]^{n-}$ (IIIi),

where n = 4; or

$[A^1]+[M^4]^{2+} [Y_]^{n-}$ (IIIj),

where n = 3, and where $[A^1]^+$, $[A^2]^+$ and $[A^3]^+$ are selected independently from among the groups mentioned for $[A]^+$, $[Y]n^-$ is as defined for formula (I) and $[M^1]^+$, $[M^2]^+$, $[M^3]^+$ are monovalent metal cations, $[M^4]^{2+}$ is a divalent metal cation and $[M^{-5}]^{3+}$ is a trivalent metal cation.

**5.** The solution according to any of claims 1 to 4, wherein the ionic liquid comprises at least one anion selected from the group consisting of

the group of halides and halogen compounds of the formulae:

$F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6$, $^-ZnCl_3^-$, $SnCl_3^-$, $CuCl_2^-$

, $CF_3SO_3^-$, $(CF_3SO_3)_2N^-$, $CF_3CO_2^-$, $CCl_3CO_2^-$, $CN^-$, $SCN^-$, $OCN^-$

the group of sulfates, sulfites and sulfonates of the general formulae:

$SO_4^{2-}$, $HSO_4^-$, $SO_3^{2-}$, $HSO_3^-$, $R^aOSO_3^-$, $R^aSO_3^-$

the group of phosphates of the general formulae

$PO_4^{3-}$, $HPO_4^{2-}$, $H_2PO_4^-$, $R^3PO_4^{2-}$, $HR^aPO_4^-$, $RaR^bPO_4^-$

the group of phosphonates and phosphinates of the general formulae:

$R^3HPO_3^-$, $R^3R^bPO_2^-$, $R^3R^bPO_3^-$

the group of phosphites of the general formulae:

$PO_3^{3-}$, $HPO_3^{2-}$, $H_2PO_3^-$, $R^3PO_3^{2-}$, $R^aHPO_3^-$, $R^3R^bPO_3^-$

the group of phosphonites and phosphinites of the general formulae:

$R_3R^bPO_2^-$, $R^aHPO_2^-$, $R^3R^bPO^-$, $R^3HPO^-$

the group of carboxylic acids of the general formula:

$R^aCOO^-$

the group of borates of the general formulae:

$BO_3^{3-}$, $HBO_3^{2-}$, $H_2BO_3^-$, $R^aR^bBO_3^-$, $R^aHBO_3^-$, $R^aBO_3^{2-}OR^3)$ $B((OR^b)$ $(OR^c)$ $(OR^d)^-$, $B(HSO_4)^-$, $B(R^aSO4)^-$

the group of boronates of the general formulae:

$R^aBO_2^{2-}$, $R^3R^bBO^-$

the group of carbonates and carbonic esters of the general formulae:

$HCO_3^-$, $CO_3^{2-}$, $R^aCO_3^-$

the group of silicates and silicic esters of the general formulae:

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$

the group of alkyl silane and aryl silane salts of the general formulae:

$R_3SiO_3^{3-}$, $R^aR^bSiO_2^{2-}$, $R^aR^bR^cSiO^-$, $R^aR^bR^cSiO_3^-$, $R^aR^bR^cSiO_2^-$, $R^aR^bSiO_3^{2-}$

the group of carboximides, bis(sulfonyl)imides and sulfonylimides of the general formulae:

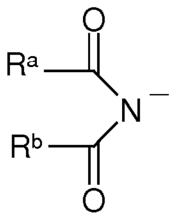

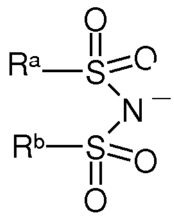

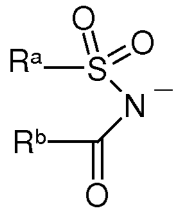

,

the group of methides of the general formula:

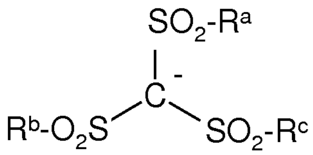

;

the group of alkoxides and aryloxides of the general formula

$R^3O^-$;

the group of halometalates of the general formula

$[M_qHal_r]^{s-}$,

where M is a metal and Hal is fluorine, chlorine, bromine or iodine, q and r are positive integers and indicate the stoichiometry of the complex and s is a positive integer and indicates the charge on the complex, the group of sulfides, hydrogen sulfides, polysulfides, hydrogen polysulfides and thiolates of the general formulae:

$S^{2-}$, $HS^-$, $[S_v]^{2-}$, $[HS_v]^-$, $[R^3S]^-$, where v is a positive integer from 2 to 10, and

the group of complex metal ions such as $Fe(CN)_6^{3-}$, $Fe(CN)_6^{4-}$, $MnO_4^-$, $Fe(CO)_4^-$, where

$R^a$, $R^b$, $R^c$ and $R^d$ are each, independently of one another, hydrogen, $C_1$-$C_{18}$-alkyl, $C_2$-$C_{18}$-alkyl which is optionally interrupted by one or more nonadjacent oxygen and/or sulfur atoms and/or one or more substituted or unsubstituted imino groups, $C_6$-$C_{14}$-aryl, $C_5$-$C_{12}$-cycloalkyl or a five- or six-membered, oxygen-, nitrogen- and/or sulfur-comprising heterocycle, where two of them may together form an unsaturated, saturated or aromatic ring which is optionally interrupted by one or more oxygen and/or sulfur atoms and/or one or more unsubstituted or substituted imino groups, where the radicals mentioned may each be additionally substituted by functional groups, aryl, alkyl, aryloxy, alkyloxy, halogen, heteroatoms and/or heterocycles.

**6.** The solution according to any of claims 1 to 5 which has a temperature of not more than 180°C.

**7.** A process for preparing a solution according to any of claims 1 to 6, which comprises the steps

a) addition of cellulose to a solution comprising an ionic liquid as specified in any of claims 1 to 6 and
b) mixing of the solution until the cellulose is completely dissolved.

**8.** The use of a solution according to any of claims 1 to 6 for the physical or chemical treatment of cellulose.

## Revendications

**1.** Solution contenant de la cellulose et en tant que solvant un liquide ionique contenant des anions et des cations, les cations comportant au moins un atome choisi dans le groupe constitué par l'azote, l'oxygène, le soufre et le phosphore, qui se trouve sous forme protonée, et le liquide ionique contenant au moins un cation qui est choisi dans le

groupe constitué par les cations de formules (IVe) à (IVt) :

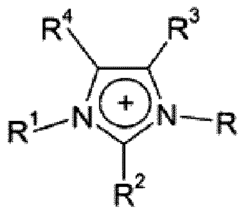
(IVe)

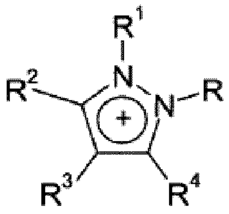
(IVf)

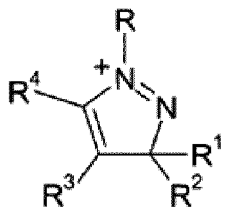
(IVg)

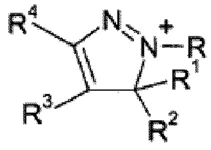
(IVg')

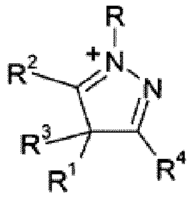
(IVh)

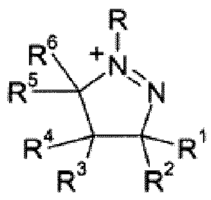
(IVi)

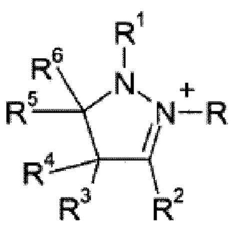
(IVj)

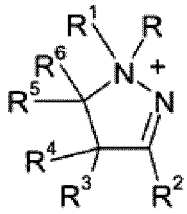
(IVj')

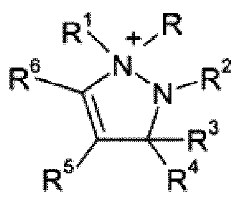
(IVk)

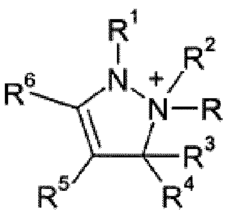
(IVk')

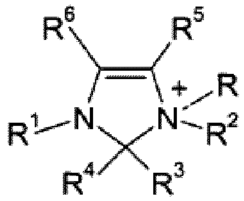
(IVl)

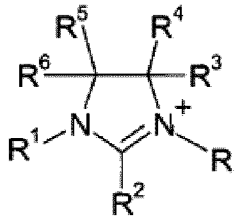
(IVm)

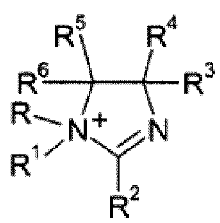
(IVm')

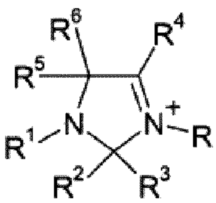
(IVn)

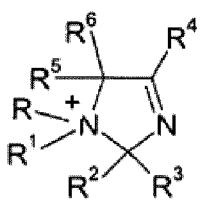
(IVn')

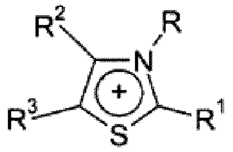

(IVo)

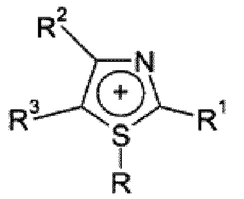

(IVo')

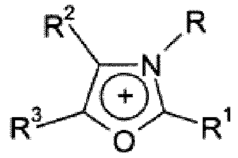

(IVp)

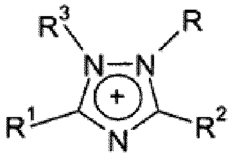

(IVq)

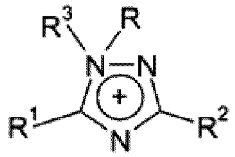

(IVq')

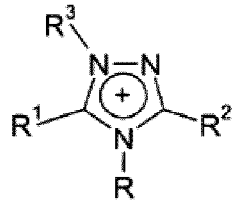

(IVq")

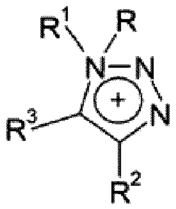

(IVr)

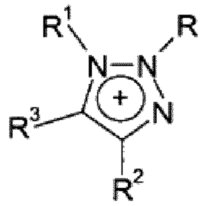

(IVr')

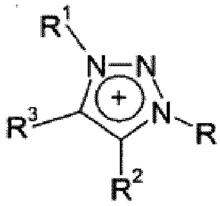

(IVr")

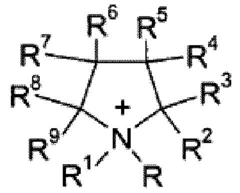

(IVs)

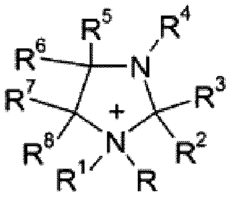

(IVt)

ainsi que des oligomères qui contiennent une telle structure, formules dans lesquelles
le radical R représente un atome d'hydrogène, et
les radicaux $R^1$ à $R^9$ représentent indépendamment les uns des autres un atome d'hydrogène, un groupe sulfo ou un radical organique contenant du carbone, saturé ou insaturé, acyclique ou cyclique, aliphatique, aromatique ou araliphatique, ayant de 1 à 20 atomes de carbone, non substitué ou substitué ou interrompu par 1 à 5 hétéroatomes ou groupes fonctionnels, les radicaux $R^1$ à $R^9$ qui dans les formules (IV) indiquées ci-dessus sont liés à un atome de carbone (et non à un hétéroatome) pouvant en outre représenter également un atome d'halogène ou un groupe fonctionnel ; ou
deux radicaux contigus de la série $R^1$ à $R^9$ pouvant également représenter ensemble un radical organique à deux liaisons, contenant du carbone, saturé ou insaturé, acyclique ou cyclique, aliphatique, aromatique ou araliphatique, ayant de 1 à 30 atomes de carbone, non substitué ou substitué ou interrompu par 1 à 5 hétéroatomes ou groupes fonctionnels.

2. Solution selon la revendication 1, **caractérisée en ce que** les cations comportent au moins un atome d'azote qui se trouve sous forme protonée en tant que cation ammonium.

3. Solution selon la revendication 1 ou 2, **caractérisée en ce que** dans la solution la cellulose est contenue à plus de 1 % en poids par rapport au poids total de la solution.

**4.** Solution selon l'une quelconque des revendications 1 à 3, caractérisée en ce les anions et les cations forment un sel de formule générale (I)

$$[A]^+_n\ [Y]^{n-} \qquad (I),$$

dans laquelle n représente 1, 2, 3 ou 4, $[A]^+$ représente un cation ammonium quaternaire, un cation oxonium, un cation sulfonium ou un cation phosphonium et $[Y]^{n-}$ représente un anion mono-, di-, tri- ou tétravalent ;
des sels mixtes de formules générales (II)

$$[A^1]^+[A^2]^+\ [Y]^{n-} \qquad (IIa),$$

où n = 2 ;

$$[A^1]^+[A^2]^+[A^3]^+\ [Y]^{n-} \qquad (IIb),$$

où n = 3 ; ou

$$[A^1]^+[A^2]^+[A^3]^+[A^4]^+\ [Y]^{n-} \qquad (IIc),$$

où n = 4 et où $[A^1]^+$, $[A^2]^+$, $[A^3]^+$ et $[A^4]^+$ sont choisis indépendamment les uns des autres parmi les groupes nommés pour $[A]^+$ et $[Y]^{n-}$ a la signification indiquée au sujet de la formule (I) ; ou
des sels mixtes de formules générales (III)

$$[A^1]^+[A^2]^+[A^3]^+[M^1]^+\ [Y]^{n-} \qquad (IIIa),$$

où n = 4 ;

$$[A^1]^+[A^2]^+[M^1]^+[M^2]^+\ [Y]^{n-} \qquad (IIIb),$$

où n = 4 ;

$$[A^1]^+[M^1]^+[M^2]^+[M^3]^+\ [Y]^{n-} \qquad (IIIc),$$

où n = 4 ;

$$[A^1]^+[A^2]^+[M^1]^+\ [Y]^{n-} \qquad (IIId),$$

où n = 3 ;

$$[A^1]^+[M^1]^+[M^2]^+\ [Y]^{n-} \qquad (IIIe),$$

où n = 3 ;

$$[A^1]^+[M^1]^+\ [Y]^{n-} \qquad (IIIf),$$

où n = 2 ;

$$[A^1]^+[A^2]^+[M^4]^{2+}\ [Y]^{n-} \qquad (IIIg),$$

où n = 4 ;

$$[A^1]^+[M^1]^+[M^4]^{2+}\ [Y]^{n-} \qquad (IIIh),$$

où n = 4 ;

$$[A^1]^+[M^5]^{3+}\ [Y]^{n-} \qquad (IIIi),$$

où n = 4 ; ou

$[A^1]^+[M^4]^{2+} [Y]^{n-}$ (IIIj),

où n = 3 et où $[A^1]^+$, $[A^2]^+$ et $[A^3]^+$ sont choisis chacun indépendamment parmi les groupes nommés pour $[A]^+$, $[Y]^{n-}$ a la signification indiquée au sujet de la formule (I) et $[M^1]^+$, $[M^2]^+$, $[M^3]^+$ représentent des cations métalliques monovalents, $[M^4]^{2+}$ représente des cations métalliques divalents et $[M^5]^{3+}$ représente des cations métalliques trivalents.

5. Solution selon l'une quelconque des revendications 1 à 4, **caractérisée en ce que** le liquide ionique contient au moins un anion qui est choisi dans le groupe consistant en

le groupe des halogénures et composés halogénés de formule :

$F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6^-$, $ZnCl_3^-$, $SnCl_3^-$, $CuCl_2^-$, $CF_3SO_3^-$, $(CF_3SO_3)_2N^-$, $CF_3CO_2^-$, $CCl_3CO_2^-$, $CN^-$, $SCN^-$, $OCN^-$,

le groupe des sulfates, sulfites et sulfonates de formule générale :

$SO_4^{2-}$, $HSO_4^-$, $SO_3^{2-}$, $HSO_3^-$, $R^aOSO_3$, $R^aSO_3^-$,

le groupe des phosphates de formule générale

$PO_4^{3-}$, $HPO_4^{2-}$, $H_2PO_4^-$, $R^aPO_4^{2-}$, $HR^aPO_4^-$, $R^aR^bPO_4^-$,

le groupe des phosphonates et phosphinates de formule générale :

$R^aHPO_3^-$, $R^aR^bPO_2^-$, $R^aR^bPO_3^-$,

le groupe des phosphites de formule générale :

$PO_3^{3-}$, $HPO_3^{2-}$, $H_2PO_3^-$, $R^aPO_3^{2-}$, $R^aHPO_3^-$, $R^aR^bPO_3^-$,

le groupe des phosphonites et phosphinites de formule générale :

$R^aR^bPO_2^-$, $R^aHPO_2^-$, $R^aR^bPO^-$, $R^aHPO^-$,

le groupe des acides carboxyliques de formule générale : $R^aCOO^-$,
le groupe des borates de formule générale :

$BO_3^{3-}$, $HBO_3^{2-}$, $H_2BO_3^-$, $R^aR^bBO_3^-$, $R^aHBO_3^-$, $R^aBO_3^{2-}$, $B(OR^a)(OR^b)(OR^c)(OR^d)^-$, $B(HSO_4)^-$, $B(R^aSO_4)^-$,

le groupe des boronates de formule générale $R^aBO_2^{2-}$, $R^aR^bBO^-$,
le groupe des carbonates et esters d'acide carbonique de formule générale :

$HCO_3^-$, $CO_3^{2-}$, $R^aCO_3^-$,

le groupe des silicates et esters d'acide silicique de formule générale :

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$,

le groupe des sels d'alkyl- ou arylsilanes de formule générale :

$R^aSiO_3^{3-}$, $R^aR^bSiO_2^{2-}$, $R^aR^bR^cSiO^-$, $R^aR^bR^cSiO_3^-$, $R^aR^bR^cSiO_2^-$, $R^aR^bSiO_3^{2-}$,

le groupe des carboximides, bis(sulfonyl)imides et sulfonylimides de formule générale :

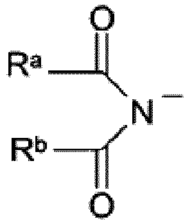 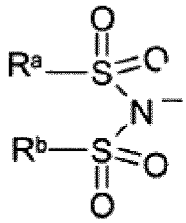 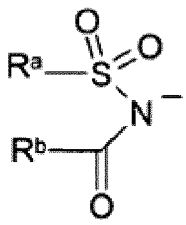 ,

le groupe des méthides de formule générale :

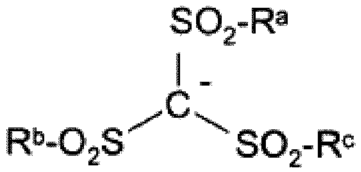

;

le groupe des alcoolates et aryloxydes de formule générale $R^aO^-$,
le groupe des halogénométallates de formule générale $[M_qHal_r]^{s-}$,
dans laquelle M représente un métal et Hal représente le fluor, le chlore, le brome ou l'iode, q et r sont des nombres entiers positifs et indiquent la stoechiométrie du complexe et s est un nombre entier positif et indique la charge du complexe,
le groupe des sulfures, hydrogénosulfures, polysulfures, hydrogénopolysulfures et thiolates de formules générales :

$S^{2-}$, $HS^-$, $[S_v]^{2-}$, $[HS_v]^-$, $[R^aS]^-$, v étant un nombre entier positif valant de 2 à 10,

et
le groupe des ions métalliques complexes, tels que $Fe(CN)_6^{3-}$, $Fe(CN)_6^{4-}$, $MnO_4^-$, $Fe(CO)_4^-$,

$R^a$, $R^b$, $R^c$ et $R^d$ représentant chacun, indépendamment les uns des autres, un atome d'hydrogène, un groupe alkyle en $C_1$-$C_{18}$, alkyle en $C_2$-$C_{18}$ éventuellement interrompu par un ou plusieurs atomes d'oxygène et/ou de soufre non contigus et/ou un ou plusieurs groupes imino substitués ou non substitués, un groupe aryle en $C_6$-$C_{14}$, cycloalkyle en $C_5$-$C_{12}$ ou un hétérocycle à cinq ou six chaînons, comportant des atomes d'oxygène, d'azote et/ou de soufre, et deux d'entre eux pouvant former ensemble un cycle insaturé, saturé ou aromatique, éventuellement interrompu par un ou plusieurs atomes d'oxygène et/ou de soufre et/ou un ou plusieurs groupes imino substitués ou non substitués, les radicaux restants pouvant en outre être substitués chacun par des groupes fonctionnels, des groupes aryle, alkyle, aryloxy, alkyloxy, des atomes d'halogène, des hétéroatomes et/ou des hétérocycles.

**6.** Solution selon l'une quelconque des revendications 1 à 5, **caractérisée en ce que** la solution présente une température d'au maximum 180 °C.

**7.** Procédé pour la préparation d'une solution selon l'une quelconque des revendications 1 à 6, comportant les étapes

a) addition de cellulose à une solution contenant un liquide ionique tel qu'indiqué dans l'une quelconque des revendications 1 à 6 et
b) mélange de la solution jusqu'à dissolution complète de la cellulose.

**8.** Utilisation d'une solution selon l'une quelconque des revendications 1 à 6, pour le traitement physique ou chimique de cellulose.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 1943176 A
- DE 10202838 A
- US 4367191 A
- WO 03029329 A
- DE 10202838 A1


### In der Beschreibung aufgeführte Nicht-Patentliteratur


- **PETER WASSERSCHEIDT.** *Angew. Chem.,* 2000, vol. 112, 3926-3945
- **K.N. MARSH et al.** *Fluid Phase Equilibria,* 2004, vol. 219, 93-98
- **J.G. HUDDLESTON et al.** *Green Chemistry,* 2001, vol. 3, 156-164
- *Angew. Chem.,* 2000, vol. 112, 3926-3945